# EUROPÄISCHE PATENTSCHRIFT

(11) **EP 2 616 378 B1**
(45) Veröffentlichungstag und Bekanntmachung des Hinweises auf die Patenterteilung: **26.03.2014**
(21) Anmeldenummer: 11754365.2
(22) Anmeldetag: 05.09.2011
(51) Int. Cl.: B66C 7/08, H02G 5/04, E01B 25/24

(54) **ANORDNUNG AUS EINER SCHIENE UND EINEM DARAN BEFESTIGTEN SCHLEIFLEITUNGSHALTER**
ARRANGEMENT OF A RAIL AND A SLIP CONTACT HOLDER MOUNTED THEREON
ARRANGEMENT COMPOSÉ D'UN RAIL ET D'UN SUPPORT DE LIGNE DE CONTACT FIXÉ À CELUI-CI

(30) Priorität: 14.09.2010 DE 102010037520
(43) Veröffentlichungstag der Anmeldung: 24.07.2013
(73) Patentinhaber: Demag Cranes & Components GmbH, 58300 Wetter (DE)
(72) Erfinder: SPIES, Gerd, 58313 Herdecke (DE); FITZLER, Stefan, 58636 Iserlohn (DE); MÜLLER, Sven, 58339 Breckerfeld (DE)
(74) Vertreter: Moser & Götze
(86) Internationale Anmeldenummer: PCT/EP2011/065327
(87) Internationale Veröffentlichungsnummer: WO 2012/034893

(56) Entgegenhaltungen:
- CH-A- 429 816
- DE-A1- 3 211 923
- DE-A1- 10 337 122
- DE-B- 1 249 301
- DE-C1- 3 311 362
- FR-A1- 2 201 561
- GB-A- 687 367
- US-A- 4 524 698

## Beschreibung

Die Erfindung betrifft eine Anordnung aus einer Schiene für Hängebahnen oder Hängekrane und einem daran befestigten Schleifleitungshalter, wobei die Schiene einen Profilkörper und einen damit verbundenen und oberhalb des Profilkörpers angeordneten Profilkopf umfasst, wobei der Profilkörper im Querschnitt gesehen c-förmig ist, einen Hohlraum für Fahrwerke ausbildet und nach unten offen mit einem Schlitz ausgebildet ist, der Profilkörper im Wesentlichen horizontal verlaufende obere Profilwandungen aufweist und der Schleifleitungshalter innerhalb des Hohlraums im Bereich der oberen Profilwandungen angeordnet und an den oberen Profilwandungen befestigt ist.

Entsprechende Schienen umfassen üblicherweise einen Schienenkopf für die Bereitstellung einer Aufhängung zur Befestigung an Decken, Wänden etc. und einen Schienenkörper zur Bereitstellung der funktionalen Aspekte, wie Laufwagenfahrbahnen, Tragabschnitte etc.

Solche selbsttragenden rohrförmigen Laufschienen für Hängebahnen, Hängekrane u. dgl. sind z.B. aus der DE 1 249 301 bekannt. Die dort beschriebene Laufschiene ist im Querschnitt beispielsweise aus zwei symmetrisch zur vertikalen Längsmittelebene angeordneten dünnwandigen Profilen zusammengesetzt, die Rollenpaare eines Fahrwerks mit oberen Wandungen und schräg nach unten zur Längsmittelebene verlaufenden Seitenwänden sowie zwei beiderseits eines unteren Schlitzes liegenden, zu diesem abwärts geneigten Fahrbahnen umschließen und oben an der Längsmittelebene mit je einem erst nach oben und dann nach außen von der Längsmittelebene weisenden Steg versehen sind, der an dem Steg des zweiten Profilstabes im nach oben weisenden Teil anliegt und mit diesem verbunden ist. Die oberen Profilwandungen fallen von der Längsmittelebene nach außen ab und der Abstand zwischen den schrägen Seitenwänden ist nur so groß, dass die Laufschiene einem Fahrwerk Platz bietet, dessen Breite nur von einem plattenförmigen Tragkörper und an diesem dicht angeordneten Rollen bestimmt ist. Die Laufschiene wird dabei über die nach oben weisenden Stege mittels einer Aufhängung z.B. an der Hallendecke befestigt, wobei die Aufhängung die nach oben weisenden Stege im nach außen weisenden Teil umklammert.

Bei solchen Schienen ist es zur Versorgung eines innenlaufenden Stromabnehmerwagens bekannt, an einer der Innenwände anliegende Schleifleitungen anzuordnen, die an den Innenwänden mit Schleifleitungshalter befestigt werden.

Von der Demag Cranes & Components GmbH, Wetter Deutschland, ist eine entsprechende sogenannte KBK II-R Hohlschiene mit innenliegender Laufwagenbahn und oben angeordneter Schleifleitung bekannt. Das Profi KBK II-R ist mit fünf innenliegenden Stromleitern ausgerüstet. Die Stromzuführung erfolgt über End- oder Streckeneinspeisungen. Die eigentliche Schleifleitung wird dabei über einen mit den oberen Profilwänden von außen verschraubbarem Halter gehalten, wozu sie in eine nach unten offene c-förmige Nut des Halters einschiebbar ist. Der Halter wird dabei durch von außen eingeschraubten Schrauben beidseitig gehalten. Die Halter können entlang der Schienenabschnitte in einem vorgegebenen Raster angeordnet werden, wozu entsprechende Durchgriffsbohrungen für die Befestigungsschrauben ausgeführt werden.

Diese Konstruktion hat sich zwar bewährt, ist aber nicht ohne weiteres bei Schienen verwendbar, bei denen die oberen Profilwände von außen nicht oder nur schlecht erreichbar sind, wie dies der Fall bei Doppelkammerschienen ist. Doppelkammerschienen weisen nämlich neben dem rohr- oder kammerförmigen Profilkörper einen entsprechend ausgebildeten Profilkopf oberhalb des Profilkörpers auf. Es ergibt sich also im Querschnitt besehen etwa die Form einer "8". Somit sind die oberen Profilwandungen des Profilkörpers nicht ohne Weiteres für eine Schraubbefestigung zugänglich, da sie von dem Profilkopf überdeckt werden.

Andererseits ist eine Zugänglichkeit von Innen praktisch unmöglich, da der untere Schlitz solcher Schienen aufgrund seiner geringen Breite kaum einen Eingriff zulässt.

Aus der DE 103 37 122 A1 ist eine schwalbenschwanzförmige Stromschiene bekannt, die in einen Nutenkanal der entsprechenden Schiene vom Abschnittende her eingeschoben wird und dabei mittels der Schwalbenschwanzführung befestigt wird.

Bei längeren Schienenabschnitten wäre jedoch Schleifleitungshalter nicht nur an den besser zugänglichen Schienenabschnittsenden gewünscht.

Aus der DE 33 11 362 C1 ist eine Schleifleitungsanordnung mit parallel zueinander liegenden Schleifleitungen bekannt, die auf einem gemeinsamen Halter befestigt sind und über diesen an einer Tragschiene angeordnet werden. Der zweiteilige Halter wird mittels eines Haltearms über hülsenförmige Spreizstifte in Bohrungen der Tragschiene gehalten. Die Tragschiene ist eine einfache I-förmige Schiene, so dass eine Zugänglichkeit von oben besteht, um die Bohrungen auszuführen, Des Weiteren ist aus dem französischen Patent FR 2 201 561 bereits bekannt, eine Schleifleitung an eine Wand einer Schiene mit einer Gewindeschraube anzuschrauben. In dem schweizerischen Patent CH 429 816 ist beschrieben, an einer Rückseite einer Schleifleitung eine Vielzahl von Isolatoren vorzusehen, um hierüber die Schleifleitung an einer Schiene zu befestigen. Die Isolatoren sind in Bohrungen in einer Wand der Schiene eingesteckt und werden dort nach Art einer Schnappverbindung gehalten. Hierfür sind an jedem Isolator zwei Rastelemente vorgesehen, die elastisch beim Einstecken des Isolators in die Bohrung aufeinander zu bewegbar sind und in ihrer Endstellung sich federnd zurückstellen und die Bohrung hinter greifen.

Die Patentschrift US 4 524 698 A offenbart eine Schiene, die einen Profilkörper mit einem Hohlraum für Fahrwerke sowie einen Profilkopf umfasst. In dem Hohlraum sind in dessen oberen Bereich Schleifleitungen angeordnet, die über einen Schleifleitungshalter an den oberen Profilwandungen befestigt sind.

Der Erfindung liegt die Aufgabe zu Grunde, eine Anordnung aus einer Schiene und einem daran befestigten Schleifleitungshalter zu schaffen, die eine einfache und sichere Befestigung der Schleifleitung bietet.

Diese Aufgabe wird durch die in Anspruch 1 wiedergegebene Anordnung gelöst. Vorteilhafte Ausgestaltungen der Anordnung sind in den Ansprüchen 2 bis 7 beschrieben.

Erfindungsgemäß wird bei einer Anordnung aus einer Schiene für Hängebahnen oder Hängekrane und einem daran befestigten Schleifleitungshalter, wobei die Schiene einen Profilkörper und einen damit verbundenen und oberhalb des Profilkörpers angeordneten Profilkopf umfasst, wobei der Profilkörper im Querschnitt gesehen c-förmig ist, einen Hohlraum für Fahrwerke ausbildet und nach unten offen mit einem Schlitz ausgebildet ist, der profilkörper im Wesentlichen horizontal verlaufende obere Profilwandungen aufweist und der Schleifleitungshalter innerhalb des Hohlraums im Bereich der oberen Profilwandungen angeordnet und an den oberen Profilwandungen befestigt ist, eine einfache und sichere Befestigung der Schleifleitung dadurch erreicht, dass in den oberen Profilwandungen eine Vielzahl von Ausstanzungen angeordnet sind, die in Längsrichtung der Schiene gesehen in mindestens einer Reihe und in regelmäßigen, sich wiederholenden Abständen angeordnet sind und an dem Schleifleitungshalter widerhakenartige Rastnasen angeordnet sind, die befestigend in die Ausstanzungen eingreifen, wobei nur in einem Teil der Vielzahl der Ausstanzungen Rastnasen der Schleifleitungshalter angeordnet sind. Da mehrere Ausstanzungen in einem regelmäßigen, sich wiederholenden Abstand, also einem Raster, in Schienenlängsrichtung angeordnet, können mehrere Schleifleitungshalter bei entsprechender Notwendigkeit einfach und wahlweise an geeigneten Orten und in geeigneten Abständen befestigt werden. Da die oberen Profilwandungen mit Ausstanzungen versehen sind und der Schleifleitungshalter mit widerhakenartigen Rastnasen ausgestaltet ist, die befestigend in die Ausstanzungen eingreifen, können die Schleifleitungshalter von unten in die oberen Wandungen werkzeuglos eingeclipst werden. Hierzu müssen die Halter nur von unten mit den Rastnasen in die Ausstanzungen eingedrückt werden. Die Ausstanzungen werden dazu vor dem Biegen des Blechprofils in die Rohbleche eingebracht. Anschließend werden die Bleche so gebogen und abgewinkelt, dass sie jeweils eine Hälfte der Schiene darstellen und die Ausstanzungen an der gewünschten Stelle angeordnet sind. Da eine Vielzahl von Ausstanzungen vorhanden sind, können die Schleifleitungen mit einer gewünschten Anzahl von Schleifleitungshaltern befestigt werden. Naturgemäß bleibt dann der überwiegende Teil der Ausstanzungen unbelegt.

Unter Rastnase wird vorliegend eine gegenüber dem Hauptkörper des Halters quer, vorzugsweise etwa senkrecht, abstehende stiftartige Lasche verstanden, die an ihrem dem Hauptkörper des Halters abgewandtem Ende mit einem widerhakenartigen Vorsprung ausgebildet ist.

In einer bevorzugten Ausgestaltung sind in Längsrichtung der Schiene gesehen mindestens zwei Reihen von Ausstanzungen nebeneinander angeordnet sind und die Ausstanzungen der mindestens zwei Reihen mit Abstand und nebeneinander bezogen auf die Längsrichtung der Schiene angeordnet.

Besonders bevorzugt ist es, wenn die Ausstanzungen in der Draufsicht besehen rechteckig, insbesondere quadratisch ausgebildet sind.

Als bevorzugte Stelle für die Ausstanzungen ist vorgesehen, diese beidseitig der den Profilkopf und den Profilkörper verbindenden Stege anzuordnen.

In einer vorteilhaften Ausgestaltung ist vorgesehen, dass die Rastnasen paarweise an dem Schleifleitungshalter zum Eingriff in zwei der Ausstanzungen angeordnet sind. Dies ergibt eine einfache und sichere Halterung und der Schleifleitungshalter wird stabil und verdrehsicher gehalten. Es gibt also mit anderen Worten jeweils links und rechts der Längsmittelebene angeordnete Paare von sich gegenüberstehende Rastnasen und Ausstanzungen. Bevorzugter Weise sind dabei die widerhakenartigen Vorsprünge zum Hintergreifen des Profilblechs jeweils voneinander weg gerichtet. Sinnvollerweise sind die widerhakenartigen Vorsprünge dabei in Längsrichtung der Rastnasen abgeschrägt, so dass sie leicht in die Ausstanzungen einführbar sind. Zusätzlich ist es dabei sinnvoll, wenn die einzelnen Rastnasen eine voneinander weg weisende Vorspannung haben, so dass ein sicheres Hintergreifen der Profilwandungen erreicht wird.

In einer besonderen und bevorzugten Ausgestaltung der Schiene ist vorgesehen, dass sich an die oberen Profilwandungen leicht schräg nach unten zu einer Längsmittelebene des Profilkörpers verlaufende Profilseitenwände anschließen, sich an dem unteren Ende der Profilseitenwände untere Profilwandungen anschließen, die zu dem unteren Schlitz abwärts geneigt sind.

Bevorzugt ist, dass der Profilkopf im Querschnitt gesehen ein im Wesentlichen C-förmiger nach oben offener Profilkopf ist, dessen Öffnung einen entlang der Längsmittelebene verlaufenden Spalt ausbildet.

Weitere Einzelheiten, Merkmale und Vorteile der Erfindung ergeben sich aus der nachfolgenden Beschreibung eines Ausführungsbeispiels anhand der Zeichnung. Es zeigen:
Fig. 1 eine perspektivische und schematische Ansicht eines Einträgerhängekrans nach dem Stand der Technik zur Veranschaulichung der Einsatzmöglichkeiten entsprechender Schienen;
Fig. 2 eine perspektivische Ansicht einer erfindungsgemäßen Anordnung aus Schiene und Schleifleitungshalter und
Fig. 3 eine Stirnseitenansicht auf die Anordnung aus Figur 2 sowie
Fig. 4 eine perspektivische und schematische Ansicht des Schleifleitungshalters aus Figur 2 zeigen.

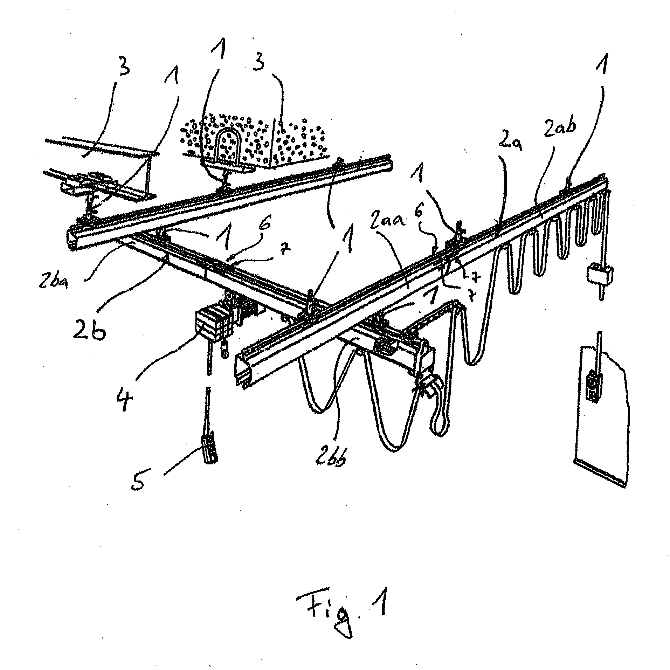

Zur Veranschaulichung der unterschiedlichsten Verwendungsmöglichkeiten von verbundenen Schienenabschnitten zur Ausbildung von Schienen ist in der Figur 1 ein Einträgerhängekran nach dem Stand der Technik gezeigt.

Mittels Aufhängevorrichtungen 1 sind im Wesentlichen horizontal verlaufende und nach unten offene c-förmig profilierte Schienen 2 an Tragelementen 3 oder weiteren Schienen 2 aufgehängt. Die Tragelemente 3 sind als Doppel-T-Träger ausgebildet. Da das vorliegende Ausführungsbeispiel einen Einträgerhängekran betrifft, sind zwei im Wesentlichen horizontal, parallel und mit Abstand zueinander verlaufende erste Schienen 2a vorgesehen, die als Fahrschienen des Einträgerhängekrans dienen, und eine zweite Schiene 2b, die eine Kranschiene bildet, die im Wesentlichen quer zu den ersten Schienen 2a ausgerichtet und entlang der ersten Schienen 2a verfahrbar ist. Hierzu ist die zweite Schiene 2b über zwei Aufhängevorrichtungen 1 jeweils an einem nicht dargestellten und entlang der ersten Schienen 2a verfahrbarem Fahrwerk aufgehängt. An der zweiten Schiene 2b ist in üblicher Weise ein Hebezeug 4 wie ein Ketten- oder Seilzug aufgehängt und mit einem weiteren nicht dargestellten Fahrwerk entlang der zweiten Schiene 2b verfahrbar. Das Hebezeug 4 ist über einen an dem Hebezeug 4 aufgehängten Hängeschalter 5 steuerbar.

Die Schienen 2a, 2b können also wahlweise als Kranbahn- oder Trägerschienen verwendet werden.

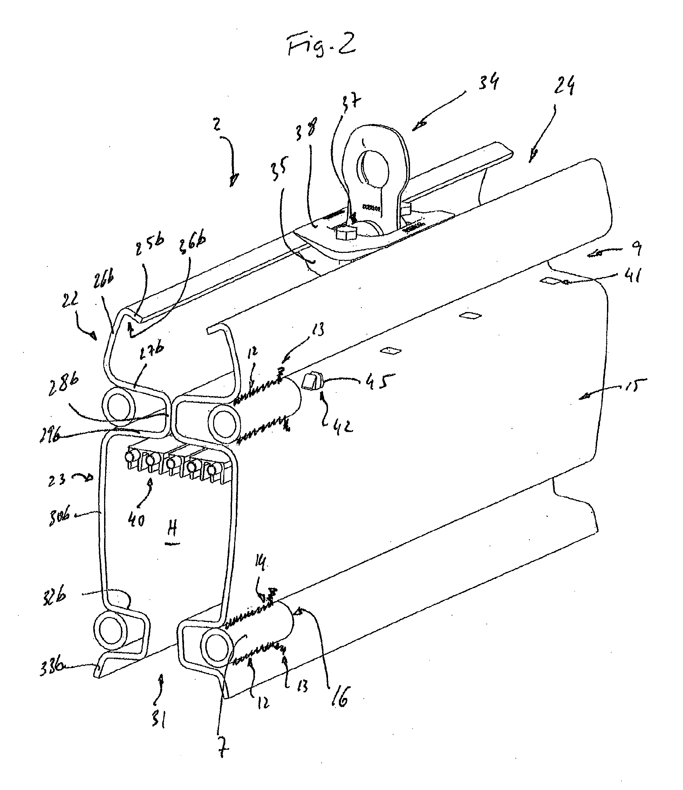

Anhand der Figuren 2 bis 4 wird nun eine erfindungsgemäße Anordnung aus Schiene 2 und Schleifleitungshalter 39 für eine Schleifleitung 40 beschrieben. Zunächst wird auf die Schienen eingegangen.

Die Schienen 2a und 2b bestehen jeweils je nach Längenanforderung aus zwei oder mehreren Schienenabschnitten 2aa und 2ab bzw. 2ba und 2bb.

Die Schienenabschnitte 2aa und 2ab bzw. 2ba und 2bb sind über stirnseitige Stoßverbindungen 6 miteinander verbunden.

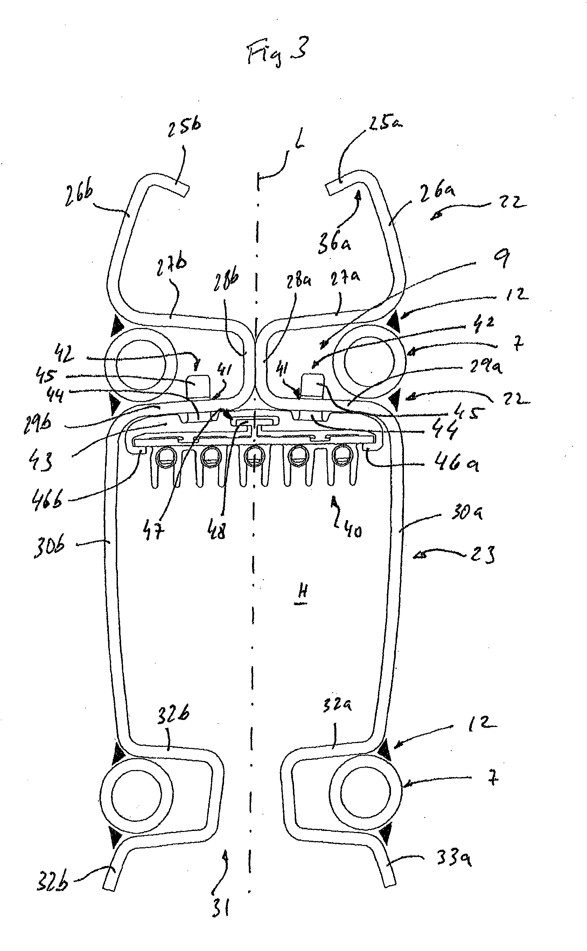

Nach folgend wird beispielhaft lediglich die Stoßverbindung 6 der Schienenabschnitte 2aa und 2ab anhand von Figuren 2 und 3 erläutert, da diejenige der Schienenabschnitte 2ba und 2bb entsprechend ausgebildet ist.

Zur Ausbildung der Stoßverbindungen 6 der Schienenabschnitte 2aa und 2ab weisen die Schienenabschnitte 2aa und 2ab jeweils an ihren Außenseiten als Hülsen 7 ausgebildete Haltelemente auf, die an den Schienenabschnittenden 8 in längs verlaufenden Winkelräumen bzw. Nuten 9 der Schienenabschnitte 2aa und 2ab angeordnet sind.

Im dargestellten Beispiel werden vier Hülsen 7 pro Schienenabschnitt verwendet, die jeweils in entsprechenden Längsnuten 9 angeordnet sind. Dabei sind pro Schienenabschnittlängsseite je zwei Hülsen 7 vorgesehen.

Die Hülsen 7 werden von Schraubbolzen als Verbindungselemente durchgriffen und bilden für deren Köpfe bzw. deren Muttern eine quer zur Längsrichtung der Schienenabschnitte verlaufende Anlagefläche 16 als Widerlagerfläche aus.

Die Hülsen 7 sind an den Schienenabschnitten 2aa und 2ab jeweils durch eine in Längsrichtung des Schienenabschnitts 2aa und 2ab verlaufende Schweißnaht 12 auf jeder der beiden Längsseiten der Hülsen 7 befestigt. Die Schweißnähte 12 müssen sich dabei nicht über die gesamte Länge der Hülsen 7 erstrecken und können von einander unterschiedlich ausgebildet sein.

Das von der Stirnseite abgewandte Ende 13 der Schweißnaht 12 weicht dabei von der Längsrichtung ab. Dabei bildet das Ende 13 zu der restlichen Schweißnaht 12 einen Winkel 14 aus und erstreckt sich aus der Nut 9 heraus bis auf die Seitenfläche 15 des Schienenprofils bzw. der fortgeführten Profilwandung.

Die Schiene 2 besteht im Querschnitt aus zwei symmetrisch zur vertikalen Längsmittelebene L angeordneten identischen Profilen 20a, 20b

Die Schiene weist dabei einen relativ entlang der Längsmittelebene L oben angeordneten Profilkopf 22 und einen damit verbundenen unterhalb liegenden Profilkörper 23 auf.

Der Profilkopf 22 ist im Querschnitt besehen ein im Wesentlichen C-förmiger nach oben offener Profilkopf, dessen Öffnung einen entlang der Längsmittelebene L verlaufenden Spalt 24 ausbildet, der beidseitig von ersten Stegabschnitten 25a, 25b begrenzt ist, die sich von der Längsmittelebene L aus gesehen schräg nach außen und gleichzeitig oben erstrecken.

Der Winkel 21 der Stegabschnitte 25a, 25b beträgt etwa 25 Grad relativ zu der Längsmittelebene L.

Der Profilkopf 22 weist ferner im Querschnitt zwei gegenüberliegende nach unten und außen verlaufende zweite Stegabschnitte 26a, 26b, die sich an die ersten Stegabschnitte 25a, 25b anschließen, sowie abschließend nach innen in Richtung der vertikalen Längsmittelebene L zurückkragende dritte Stegabschnitte 27a, 27b, die sich an die zweiten Stegabschnitte 26a, 26b anschließen, auf.

D.h. der Profilkopf 22 ist an seiner Basis breiter und verschmälert sich in Richtung weg von dem Profilkörper 23. So kann eine Aufhängung 34 für die Schiene 2 verwendet werden, die sich durch den Spalt 24 in den hohlen Profilkopf 22 "einschwenken" lässt, da somit die diagonale Erstreckung (im Querschnitt besehen) groß genug ist, um einen schwenkbaren Einschwenkteil 35 der Aufhängung 34 aufzunehmen, das anschließend etwa waagerecht geschwenkt wird und dabei formschlüssig in die durch die ersten Stegabschnitte 25a, 26b gebildeten Sicken 36a, 36b des Profilkopfs 22 eingreift. Somit wird bei entsprechender auf einander Abgestimmter Dimensionierung des Profilkopfes 22 und der Aufhängung 23 bzw. deren Einschwenkteils 25 der Profilkopf 22 auf einfache Weise in Querrichtung durch Formschluss gehalten.

Alternativ müsste die Höhe des Profilkopfs 22 wesentlich größer ausfallen und die Schiene 2 könnte insgesamt weniger kompakt und steif ausgebildet werden.

Um die Aufhängung 34 an dem Profilkopf 22 zu befestigen und zu fixieren, wird zunächst das erwähnte Einschwenkteil 35 etwa senkrecht an der Aufhängung einseitig anliegend geschwenkt, so dass es mit der anderen Seite in den Spalt 24 eingeführt werden kann.

Anschließend wird die Aufhängung 34 mit dem Einschwenkteil 35 schräg in eine der unteren Ecken des Profilkopfs 22 geschoben, die durch die Stegabschnitte 26a, 27a bzw. 26b, 27b ausgebildet werden.

Dann ist es möglich, das andere Ende des Einschwenkteils 35 an dem Stegabschnitt 25a bzw. 25b vorbei in den Spalt 24 einzuführen und abschließend das Einschwenkteil waagerecht zu schwenken und in die Sicken 36a, 36b einzuführen. Zur Fixierung in Längsrichtung des Spalts 24 ist ein rahmenartiges Widerlager 38 mit dem Einschwenkteil 35 unter Einklemmung der Stegabschnitte 25a und 25b verschraubt.

Somit trägt die Aufhängung 34 bereits die Schiene 2 über das Einschwenkteil 35 ohne eine Verschraubung etc. Somit wird die gesamte Belastung von dem Schwenkbolzen 37 der Aufhängung aufgenommen, der wesentlich belastbarer Dimensioniert werden kann als ein normaler Schraubbolzen einer Klemmverbindung aus dem Stand der Technik.

Zusätzlich sind vierte etwa entlang der Längsmittelebene L verlaufende Stegabschnitte 28a, 28b an dem Profilkopf 22 vorgesehen, die sich an die dritten Stegabschnitte 27a, 27b anschließen und den Profilkopf 22 mit dem Profilkörper 23 über dessen obere Profilwandungen 29a, 29b verbinden.

Die vierten Stegabschnitte 28a, 28b des Profilkopfes 22 liegen an einander an und sind dort miteinander verschweißt. Somit werden die Profile 20a, 20b zur Ausbildung der Schiene 2 verbunden.

Der Profilkörper 23 bildet mit oberen im Wesentlichen horizontal verlaufenden Profilwandungen 29a, 29b und leicht schräg nach unten zur Längsmittelebene L verlaufenden Profilseitenwänden 30a, 30b sowie zwei beiderseits eines unteren Schlitzes 31 liegenden, zu diesem leicht abwärts geneigten unteren Profilwandungen 32a, 32b einen Hohlraum H für Fahrwerke aus, wobei unteren Profilwandungen 32a, 32b eine Lauffläche für die entsprechenden Räder ausbilden. Zusätzlich kann im Bereich der oberen Profilwandungen 29a, 29b eine Schleifleitung angeordnet werden.

Die untere Profilwandung 32a, 32b am Schlitz 31 ist im Wesentlichen nach unten und dann schräg nach außen und abschließend schräg nach unten fortgeführt. Die so entstehenden Endabschnitte 33a, 33b der unteren Profilwandung 32a, 32b erlauben eine Herausführung der Schweißnaht 12, wie oben erläutert.

Der Winkel Endabschnitte 33a, b der unteren Profilwandung 32a, 32b beträgt etwa 110 Grad relativ zu der Horizontalen.

Die oberen Profilwandungen 29a, 29b sind mit Ausstanzungen 41 versehen, die vor dem Biegen des Blechprofils in die Rohbleche eingebracht wurden. Anschließend wurden die Bleche so gebogen und abgewinkelt, dass sie jeweils eine Hälfte der Schiene 2 darstellen und die Ausstanzungen 41 an der gewünschten Stelle in der Nut 9 zwischen dem Profilkopf 22 und dem Profilkörper 23 jeweils beidseitig der Längsmittelebene L neben dem Steg bzw. den Stegen 28a, 28b angeordnet sind.

Die Ausstanzungen 41 sind in einem regelmäßigen, sich wiederholenden Abstand, also einem Raster, in Schienenlängsrichtung angeordnet. Somit können mehrere Schleifleitungshalter 39 bei entsprechender Notwendigkeit einfach und wahlweise befestigt werden. Hierbei werden nur in einem Teil der Vielzahl der Ausstanzungen 41 von Rastnasen 42 der Schleifleitungshalter 39 belegt. Durch die Vielzahl der Ausstanzungen 41 können die Schleifleitungshalter 39 in einer gewünschten Anzahl und in Längsrichtung der Schiene 2 gesehen in einem gewünschten Abstand angeordnet werden. Hierbei sind in Längsrichtung der Schiene 2 gesehen zwei Reihen von Ausstanzungen 41 nebeneinander angeordnet. Auch sind die Ausstanzungen 41 der mindestens zwei Reihen mit Abstand und nebeneinander, d.h. auf gleicher Höhe bezogen auf die Längsrichtung der Schiene 2 angeordnet sind.

Die Ausstanzungen 41 sind in der Draufsicht besehen quadratisch ausgebildet.

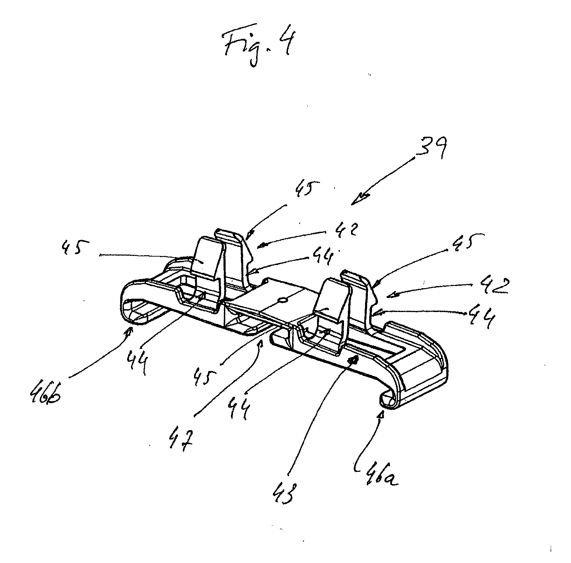

Der Schleifleitungshalter 39 ist mit widerhakenartigen Rastnasen 42 ausgestaltet (vergleiche Figur 4), die befestigend in die Ausstanzungen 41 eingreifen, um den Schleifleitungshalter von unten in die oberen Wandungen 29a, 29b werkzeuglos einzuclipsen bzw. einzurasten. Hierzu muss der Halter 39 nur von unten mit den Rastnasen 42 in die Ausstanzungen 41 eingedrückt werden.

Jede Rastnase weist eine gegenüber dem Hauptkörper 43 des Halters 39 etwa senkrecht, abstehende stiftartige Lasche 44 auf, die an ihrem dem Hauptkörper 43 des Halters abgewandtem Ende mit einem widerhakenartigen Vorsprung 45 ausgebildet ist.

Die widerhakenartigen Vorsprünge 45 hintergreifen beim Einbau das Profilblech der oberen Wandungen 29a, 29b im Bereich der Ausstanzungen 41. Die widerhakenartigen Vorsprünge 45 sind dabei in Längsrichtung der Rastnasen 42 abgeschrägt, so dass sie leicht in die Ausstanzungen 41 unter federnder zwischenzeitlicher Ablenkung einführbar sind.

Der Schleifleitungshalter 39 ist ein streifenförmiges Spritzgussteil, das eine im Wesentlichen nach unten offene c-Form aufweist. Auf seinem im Einbauzustand nach oben zu den oberen Wandungen 29a, 29b zeigenden Rücken sind die Rastnasen 42 paarweise angeordnet. Es gibt also mit anderen Worten jeweils links und rechts der Längsmittelebene angeordnete Paare von sich gegenüberstehende Rastnasen 42, deren widerhakenartigen Vorsprünge 45 voneinander abgewandt sind.

Mit den seitlichen Stegen 46a, b des "C" und einer entsprechend ausgeformten zentralen Nut 47 im dem Hauptkörper 43 wird die eigentliche Schleifleitung 40 getragen.

Dazu wird sie in die durch die Stege 46a, 46b des "C" und dem Hauptkörper 43 gebildete Nut eingeschoben, wobei sie die Stege 46a, 46b hintergreift und gleichzeitig mit einem zentralen im Querschnitt T-förmigen Steg 48 in die Nut 47 eingreift.

### Bezugszeichenliste

- 1: Aufhängevorrichtung
- 2: Schiene
- 2aa, 2ab, 2ba, 2bb: Schienenabschnitt
- 3: Tragelemente
- 4: Hebezeug
- 5: Hängeschalter
- 6: Stoßverbindung
- 7: Hülse
- 8: Schienenabschnittende
- 9: Nut
- 12: Schweißnaht
- 13: Ende der Schweißnaht
- 14: Winkel
- 15: Seitenfläche
- 16: Anlagefläche
- 20a, 20b: Profil
- 21: Winkel
- 22: Profilkopf
- 23: Profilkörper
- 24: Spalt
- 25a, 25b: erster Stegabschnitt
- 26a, 26b: zweiter Stegabschnitt
- 27a, 27b: dritter Stegabschnitt
- 28a, 28b: vierter Stegabschnitt
- 29a, 29b: obere Profilwandung
- 30a, 30b: Profilseitenwand
- 31: Schlitz
- 32a, 32b: untere Profilwandung
- 33a, 33b: Endabschnitt
- 34: Aufhängung
- 36a, 36b: Sicke
- 35: Einschwenkteil
- 37: Schwenkbolzen
- 38: Widerlager
- 39: Schleifteitungshalter
- 40: Schleifieitung
- 41: Ausstanzung
- 42: Rastnase
- 43: Hauptkörper
- 44: Lasche
- 45: widerhakenartiger Vorsprung
- 47: Nut
- 46a, 46b: Steg
- 48: T-förmiger Steg
- L: Längsmittelebene
- H: Hohlraum

## Patentansprüche

1. Anordnung aus einer Schlene (2) für Hängebahnen oder Hängekrane und einem daran befestigten Schleitieitungshalter (39), wobei die Schiene (2) einen Profilkörper (23) und einen damit verbundenen und oberhalb des Profilkörpers (23) angeordneten Profilkopf (22) umfasst, wobei der Profilkörper (23) im Querschnitt gesehen c-förmig ist, einen Hohlraum (H) für Fahrwerke ausbildet und nach unten offen mit einem Schlitz (31) ausgebildet ist, der Profilkörper (23) im Wesentlichen horizontal verlaufende obere Profilwandungen (29a, 29b) aufweist und der Schleifleitungshalter (39) innerhalb des Hohlraums (H) im Bereich der oberen Profilwandungen (29a, 29b) angeordnet und an den oberen Profilwandungen (29a, 29b) befestigt ist, **dadurch gekennzeichnet, dass** in den oberen Profilwandungen (29a, 29b) eine Vielzahl von Ausstanzungen (41) angeordnet sind, die in Längsrichtung der Schiene (2) gesehen in mindestens einer Reihe und in regelmäßigen, sich wiederholenden Abständen angeordnet sind und an dem Schleifleitungshalter (39) widerhakenartige Rastnasen (42) angeordnet sind, die befestigend in die Ausstanzungen (41) eingreifen, wobei nur in einem Teil der Vielzahl der Ausstanzungen (41) Rastnasen (42) der Schleifleitungshalter (39) angeordnet sind.

2. Anordnung nach Anspruch 1, **dadurch gekennzeichnet, dass** in Längsrichtung der Schiene (2) gesehen mindestens zwei Reihen von Ausstanzungen (41) nebeneinander angeordnet sind und die Ausstanzungen (41) der mindestens zwei Reihen mit Abstand und nebeneinander bezogen auf die Längsrichtung der Schiene (2) angeordnet sind.

3. Anordnung nach Ansprüche 1 oder 2, **dadurch gekennzeichnet, dass** die Ausstanzungen (41) in der Draufsicht rechteckig, insbesondere quadratisch ausgebildet sind.

4. Anordnung nach einem der Ansprüche 1 bis 3, **dadurch gekennzeichnet, dass** Ausstanzungen (41) beidseitig der den Profilkopf (22) und den Profilkörper (23) verbindenden Stege (28a, 28b) angeordnet sind.

5. Anordnung nach einem der Ansprüche 1 bis 4, **dadurch gekennzeichnet, dass** die Rastnasen (42) paarweise an dem Schleifleitungshalter (39) zum Eingriff in zwei der Ausstanzungen (41) angeordnet sind.

6. Anordnung nach einem der Ansprüche 1 bis 5, **dadurch gekennzeichnet, dass** sich an die oberen Profilwandungen (29a, 29b) leicht schräg nach unten zu einer Längsmittelebene (L) des Profilkörpers (23) verlaufende Profilseitenwände (30a, 30b) anschließen, sich an dem unteren Ende der Profilseitenwände (30a, 30b) untere Profilwandungen (32a, 32b) anschließen, die zu dem unteren Schlitz (31) abwärts geneigt sind.

7. Anordnung nach einem der Ansprüche 1 bis 6, **dadurch gekennzeichnet, dass** der Profilkopf (22) im Querschnitt gesehen ein im Wesentlichen C-förmiger nach oben offener Profilkopf ist, dessen Öffnung einen entlang der Längsmittelebene (L) verlaufenden Spalt (24) ausbildet.

## Claims

1. Arrangement comprising a rail (2) for suspended railways or overhead cranes and a mounting (39) fastened thereto for lines for sliding contact, the rail (2) comprising a profiled main body (23) and a profiled head (22) arranged above the profiled main body (23) and connected thereto, the profiled main body (23) being C-shaped when seen in cross-section, forming a cavity (H) for running gear and being formed to have a slot (31) to make it open in the downward direction, the profiled main body (23) having upper profile walls (29a, 29b) which extend substantially horizontally and the mounting (39) for lines for sliding contact being arranged within the cavity (H) in the region of the upper profile walls (29a, 29b) and being fastened to the upper profile walls (29a, 29b), **characterised in that** there are arranged in the upper profile walls (29a, 29b) a plurality of punched-out holes (41) which, looking in the longitudinal direction of the rail (2), are arranged at regular repeated intervals and in at least one row, and there are arranged on the mounting (39) for lines for sliding contact latching noses (42) of a barbed kind which engage in the punched-out holes (41) with a fastening action, latching noses (42) belonging to the mountings (39) for lines for sliding contact being arranged in only some of the plurality of punched-out holes (41).

2. Arrangement according to claim 1, **characterised in that**, looking in the longitudinal direction of the rail (2), at least two rows of punched-out holes (41) are arranged next to one another, and the punched-out holes (41) in the at least two rows are arranged next to one another at a distance relative to the longitudinal direction of the rail (2).

3. Arrangement according to claim 1 or 2, **characterised in that** the punched-out holes (41) are of a square-cornered, and in particular square, form in plan.

4. Arrangement according to one of claims 1 to 3, **characterised in that** punched-out holes (41) are arranged on both sides of the webs (28a, 28b) which connect the profiled head (22) and the profiled main body (23).

5. Arrangement according to one of claims 1 to 4, **characterised in that** the latching noses (42) are arranged on the mounting (39) for lines for sliding contact in pairs to engage in two of the punched-out holes (41).

6. Arrangement according to one of claims 1 to 5, **characterised in that** there continue from the upper profile walls (29a, 29b) profile side-walls (30a, 30b) which extend downwards at a slight obliquity to a longitudinal centre plane (L) of the profiled main body (23), and there continue from the bottom end of the profile side-walls (30a, 30b) lower profile walls (32a, 32b) which are inclined downwards to the slot (31) at the bottom.

7. Arrangement according to one of claims 1 to 6, **characterised in that**, seen in cross-section, the profiled head (22) is a substantially C-shaped profiled head which is open in the upward direction and whose opening forms a gap (24) which extends along the longitudinal centre plane (L).

## Revendications

1. Structure constituée d'un rail (2) pour voies suspendues ou ponts roulants suspendus et d'un support de lignes de contact (39) fixé audit rail, le rail (2) comportant un corps profilé (23) et une tête profilée (22) disposée au-dessus du corps profilé (23) et reliée à celui-ci, le corps profilé (23) ayant la forme d'un C dans une vue en coupe transversale, formant une cavité (H) destinée à des mécanismes de roulement et présentant une conformation ouverte vers le bas dotée d'une fente (31), le corps profilé (23) comportant des parois profilées supérieures (29a, 29b) s'étendant sensiblement horizontalement et le support de lignes de contact (39) étant disposé à l'intérieur de la cavité (H) dans la région des parois profilées supérieures (29a, 29b) et fixé aux parois profilées supérieures (29a, 29b), **caractérisée en ce que** dans les parois profilées supérieures (29a, 29b) sont ménagées un grand nombre de découpes (41) qui sont disposées, lorsque l'on regarde dans la direction longitudinale du rail (2), en au moins une rangée et à intervalles réguliers répétitifs et au niveau du support de lignes de contact (39) sont disposés des ergots d'encliquetage (42), de type ardillons d'hameçon, qui s'engagent, en s'y fixant, dans les découpes (41), les ergots d'encliquetage (42) du support de lignes de contact (39) n'étant disposés que dans une partie du grand nombre de découpes (41).

2. Structure selon la revendication 1, **caractérisée en ce que**, lorsque l'on regarde dans la direction longitudinale du rail (2), au moins deux rangées de découpes (41) sont disposées côte à côte et **en ce que** les découpes (41) des au moins deux rangées sont ménagées à distance et côte à côte par référence à la direction longitudinale du rail (2).

3. Structure selon les revendications 1 ou 2, **caractérisée en ce que** les découpes (41) présentent, en vue de dessus, une conformation rectangulaire, notamment carrée.

4. Structure selon l'une des revendications 1 à 3, **caractérisée en ce que** les découpes (41) sont ménagées des deux côtés des nervures (28a, 28b) reliant la tête profilée (22) et le corps profilé (23).

5. Structure selon l'une des revendications 1 à 4, **caractérisée en ce que** les ergots d'encliquetage (42) sont disposés par paires au niveau du support de lignes de contact (39) en vue de s'engager dans deux des découpes (41).

6. Structure selon l'une des revendications 1 à 5, **caractérisée en ce que** des parois profilées latérales (30a, 30b), qui s'étendent légèrement obliquement vers le bas par rapport à un plan médian longitudinal (L) du corps profilé (23), se raccordent aux parois profilées supérieures (29a, 29b) et **en ce que** des parois profilées inférieures (32a, 32b), qui sont inclinées vers le bas par rapport à la fente inférieure (31), se raccordent à l'extrémité inférieure des parois profilées latérales (30a, 30b).

7. Structure selon l'une des revendications 1 à 6, **caractérisée en ce que**, dans une vue en coupe transversale, la tête profilée (22) est une tête profilée qui a sensiblement une forme de C ouverte vers le haut dont l'ouverture forme un écartement (24) qui s'étend le long du plan médian longitudinal (L).
